# EUROPEAN PATENT SPECIFICATION

(11) **EP 0 816 304 B1**
(45) Date of publication and mention of the grant of the patent: **19.12.2001**
(21) Application number: 97304822.6
(22) Date of filing: 02.07.1997
(51) Int. Cl.: C04B 35/5831

(54) **Ceramic bonded cubic boron nitride compact**
Keramisch gebundener kompakter Körper aus kubischem Bornitrid
Corps compact en nitrure de bore cubique lié par céramique

(30) Priority: 03.07.1996 US 677045
(43) Date of publication of application: 07.01.1998
(73) Proprietor: GENERAL ELECTRIC COMPANY, Schenectady, NY 12345 (US)
(72) Inventor: Cerutti, David Bruce, Worthington, Ohio 43085 (US); Marek, Henry Samuel, Worthington, Ohio 43235 (US); Klug, Frederic Joseph, Schenectady, New York 12303 (US)
(74) Representative: Goode, Ian Roy

(56) References cited:
- FR-A- 2 375 155
- US-A- 5 271 749
- DATABASE WPI Week 8830 Derwent Publications Ltd., London, GB; AN 88-209303 XP002061902 "Cubic boron nitride-based sintered materials mfr." & JP 63 145 726 A (MITSUBISHI METAL CORP.) , 17 June 1988

## Description

This invention relates to ceramic bonded cubic boron nitride ("cBN") compacts for use as machining tools, abrasives, wire dies, wear parts, heat sinks and the like.

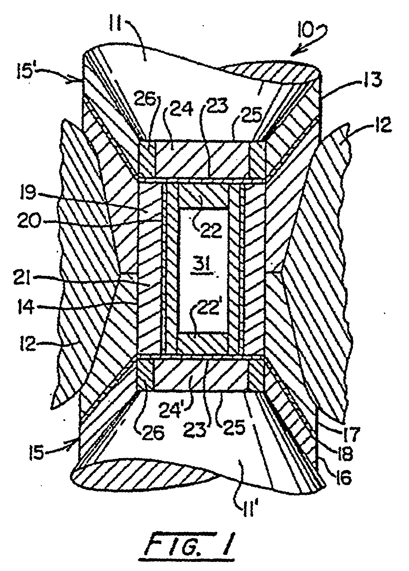

Three crystalline forms of boron nitride are known: (1) hexagonal boron nitride (hBN), a soft graphitic form similar in structure to graphite carbon; (2) wurtzitic boron nitride (wBN), a hard hexagonal form similar to hexagonal diamond; and (3) cubic boron nitride (cBN), a hard zinc blend form similar to cubic diamond. The three boron nitride crystal structures may be visualized as formed by the stacking of a series of sheets or layers of atoms. FIGS. 1-a through 1-c of U.S. Pat. No. 4,188,194 illustrate these three structures in greater detail. In hBN crystals, the boron and nitride atoms bonded together are in the same plane as stacked layers. In the more dense cBN crystal structures, the atoms of the stacked layers are puckered out of plane. In addition, the layers are stacked along the [001] direction in hBN crystals, whereas in the cBN crystal, the layers are stacked along the [111] direction. Furthermore, bonding between the atoms within the layers of an hBN crystal is predominantly of the strong covalent type, with only weak Van derWaals bonding between layers. In cBN crystals, strong, predominantly covalent tetrahedral bonds are formed between each atom and the four adjacent atoms.

Conversion of one type of boron nitride to another, for example converting hBN into cBN monocrystalline and polycrystalline particles is well known. U.S. Pat. No. 2,947,617 describes a method for preparing cubic boron nitride by the subjection of a hexagonal form of boron nitride, in the presence of a specific additive material, to very high pressures and temperatures. The pressures and temperatures are within the cubic boron nitride stable region defined by the phase diagram of boron nitride. Cubic boron nitride is recovered after removal of the highpressure and high-temperature condition. The added material or catalyst is selected, for example, from the class of alkali metals, alkaline earth metals, tin, lead, antimony and nitrides of these metals. The cubic boron nitride stable region is that represented in FIG. 1 of U.S. Pat. No. 2,947,617 shown above the equilibrium line on the phase diagram therein.

Of the three types, the high pressure form of boron nitride (cBN) is the most important commercially. Diamond is the only material harder than cBN, and since diamond reacts with certain materials, cBN has found a wide variety of uses as machining tools and the like. Polycrystalline cBN is useful, for example, for high speed machining of ferrous metals where the reaction of diamond with iron is a problem. Such cBN tools, often referred to.as cBN "compacts", have excellent abrasive wear resistance, thermal stability, high thermal conductivity, good impact resistance and low coefficient of friction in contact with a workpiece.

A compact may be more particularly characterized as an integrally-bonded structure formed of a sintered, polycrystalline mass of abrasive particles, such as diamond or cBN. Although such compacts may be self-bonded without the aid of a bonding matrix or second phase, it generally is preferred, as is discussed in U.S. Pat. Nos. 4,063,909 and 4,601,423, to employ a suitable bonding matrix which usually is a metal such as cobalt, iron, nickel, platinum, titanium, chromium, tantalum, or an alloy or mixture thereof. The bonding matrix, which is usually provided at from about 10% to 30% by volume, additionally may contain a recrystallization or growth catalyst such as aluminum for CBN or cobalt for diamond.

CBN compacts are typically used as cluster compacts or composite compacts, or as particles agglomerated together or bonded to a tool body to form an abrasive tool. In a compact, the abrasive crystals are chemically bonded together, typically in a self-bonded relationship. Individual cubic boron nitride particles are physically bonded together in a metal, resin, or vitrified matrix, such as nickel or phenolic resin, to form an abrasive tool such as a grinding wheel. The individual CBN abrasive particles may also be coated with metals such as Ni, Co, Cu and Ti; intermetallics such as Ni-Al and Ni-B; and ceramic composites prior to incorporation into the abrasive tool.

Abrasive tools may also be provided by bonding the cubic boron nitride abrasives directly to the surface of a tool body by conventional electroplating techniques, preferably following preparation of the cBN surface with conventional pretreatments. U.S. Pat. Nos. 3,136,615 and 3,233,988 provide a detailed description of certain types of cluster compacts and methods for their manufacture. U.S. Pat. Nos. 3,743,489 and 3,767,371 provide a detailed disclosure of certain types of composite compacts and methods for their manufacture. U.S. Pat. Nos. 3,081,161; 2,137,200; 2,334,048; and 4,549,372 describe examples of abrasive tools comprised of agglomerated particles and methods for their manufacture.

For many applications, it is preferred that the compact be bonded to a substrate material to form a laminate or supported compact arrangement. Typically, the substrate material is provided as a cemented metal carbide which comprises, for example, tungsten, titanium, or tantalum carbide particles, or a mixture thereof, which are bonded together with a binder of between about 6% to about 25% by weight of a metal such as cobalt, nickel, or iron, or a mixture or alloy thereof. As is shown, for example, in U.S. Pat. Nos. 3,381,428; 3,852,078; and 3,876;751, compacts and supported compacts have found acceptance in a variety of applications as parts or blanks for cutting and dressing tools, as drill bits, and as wear parts or surfaces.

The basic method for manufacturing the polycrystalline compacts and supported compacts of the type described herein involves the placing of an unsintered mass of abrasive, crystalline particles, such as diamond or cBN, or a mixture thereof, within a protectively shielded metal enclosure which is disposed within the reaction cell of a high temperature/high pressure (HT/HP) apparatus of a type described further in U.S. Pat. Nos. 2,947,611; 2,941,241; 2,941,248; 3,609,818; 3,767,371; 4,289,503; 4,673,414; and 4,954,139, the disclosures of which are expressly incorporated herein by reference.

A metal catalyst may also be placed in the enclosure with the abrasive particles if the sintering of diamond or cBN particles is contemplated. In addition, a pre-formed mass of a cemented metal carbide for supporting the abrasive particles and thereby forming a supported compact therewith may also be included. The contents of the cell are then subjected to processing conditions selected as sufficient to effect intercrystalline bonding between adjacent grains of the abrasive particles and, optionally, the joining of the sintered particles to the cemented metal carbide support. Such processing conditions generally involve the imposition for about 3 to 120 minutes of a temperature of at least 1300° C and a pressure of at least 20 kbar.

The use of cBN crystals as a starting material for making polycrystalline material is well known in the art. U.S. Pat. No. 4,647,546 by Hall discloses a process for making polycrystalline cBN compact by combining cBN with suitable additives.

Use of both cBN and hBN as starting materials for forming polycrystalline cBN is also known in the art. When both cBN crystals and hBN are used as starting materials, the cBN crystals apparently provide nucleation sites for facilitating the formation of polycrystalline cBN during high pressure, high temperature sintering.

Aluminum containing materials have certain desirable properties which have led to their use in prior art compacts. CBN compositions using aluminum as an aid in bonding cBN under high pressure, high temperature conditions are described in U.S. Pat. No. 3,944,398 by Bell. Bell describes the use of a binder material comprising a boride, nitride or silicide refractory substance, and a solvent of aluminum, lead, tin, magnesium, lithium or alloys thereof. The preferred embodiment of Bell employs silicon nitride as a refractory substance and aluminum as a solvent. Bell states that substantially all of the aluminum reacts with the silicon nitride to form aluminum nitride. However, the presence of a large amount of other, softer materials tends to interfere with intergranular cBN to cBN bonding and adversely affects the abrasion resistance of the sintered cBN compact.

Another material commonly found in polycrystalline cBN compacts is cobalt. U.S. Pat. No. 4,619,698 by Ueda discloses sintered cBN containing at least one metal selected from the group consisting of cobalt and nickel. The use of cobalt as a solvent and binder material has been shown to improve the degree of sintering of the cBN compact. Other useful metallic components include iron, nickel, platinum, titanium, chromium, tantalum, zirconium, copper, and mixtures thereof.

A preferred way of forming a cBN compact containing cobalt is to form a layer of the starting material for the cBN on a cemented tungsten carbide substrate which contains cobalt as a binding material. The cobalt binder phase in the cemented tungsten carbide comprises an alloy of cobalt, tungsten and carbon, probably a ternary eutectic melting at about 1320° C. When the composite of a cemented tungsten carbide substrate and cBN crystals, for example, is processed at the high temperatures and pressures of a high pressure press, the cobalt phase in the cemented tungsten carbide melts and infiltrates into the boron nitride layer and facilitates the formation of the intercrystalline bonding required in polycrystalline cBN.

Other additives may be chosen to impact the manufacturing or processing of the sintered polycrystalline cBN itself. Once the cBN compact has been sintered, it is often necessary to machine the compact into the desired size and shape of the particular cutting tool to be used, for example, by electrical discharge machining (EDM).

Polycrystalline cBN compacts and supported compacts are manufactured in general accordance with the methods previously discussed. However, in the formation of cBN compacts via the previously described method, the metal which is swept through the crystalline mass need not necessarily be a catalyst or solvent for cBN recrystallization. Accordingly, a polycrystalline mass of cBN may be joined to a cobalt-cemented tungsten carbide substrate by the sweep through of the cobalt from the substrate and into the interstices of the crystalline mass notwithstanding that cobalt is not a catalyst or solvent for the recrystallization of cBN. Rather, the interstitial cobalt functions as a binder between the polycrystalline cBN compact and the cemented tungsten carbide substrate.

The HT/HP sintering process for cBN is effected under conditions in which cBN is the thermodynamically stable phase. It is speculated that under these conditions, intercrystalline bonding between adjacent crystal grains is also effected. The CBN concentration in the compact or in the abrasive table of the supported compact is preferably at least about 50% by volume. Methods for making cBN compacts and supported compacts are more fully described in U.S. Pat. Nos. 2,947,617; 3,136,615; 3,233,988; 3,743,489; 3,745,623; 3,831,428; 3,918,219; 4,188,194; 4,289,503; 4,673,414; 4,797,326; and 4,954,139. Exemplary cBN compacts are disclosed in U.S. Pat. No. 3,767,371 to contain greater than about 70% by volume of cBN and less than about 30% by volume of a binder metal such as cobalt. Such compacts are manufactured commercially by the General Electric Company under the name BZN 6000®.

Similar direct bonded compacts have also incorporated hBN, in addition to cBN, as a starting material. For example, U.S. Pat. No. 5,271,749 discloses a sintered polycrystalline compact preferably containing 45 to 65% by weight cBN, 30 to 45% by weight hBN, 2 to 7 % by weight aluminum nitride, and cobalt aluminide having a melting temperature lower than the melting temperature of the cobalt phase.

Another class of compacts -- including the compacts of the present invention -- do not rely on the direct or intercrystalline bonding of the previously discussed compacts. Instead, such compacts are comprised of a polycrystalline mass of diamond or cBN particles having a second phase of a metal or alloy, a ceramic, or a mixture thereof.

The second material phase of such compacts functions as a bonding agent. Compacts such as those described in U.S. Pat. No. 4,334,928, comprising 80 to 10% by volume of CBN and 20 to 90% by volume of a ceramic binder (including sub-stoichiometric ceramics) such as titanium nitride, may be considered exemplary of a ceramic bonded compact. Other exemplary CBN/TiN compacts are manufactured commercially by the General Electric Company under the name BZN 8100®.

FR 2 375 155 A deals with BN compacts and especially cBN compacts which are prepared after compacting the sintering of BN powder, a ceramic powder and Al, Si or their metallic alloys. It discloses, for example, a starting powder mixture including:
- 60 parts by volume of cBN powder with av. Grain size of 7 µm
- 40 parts by volume of an alloy powder composed of 35 vol % TiN_{0,73} and 5 vol % Al₃Tᵢ.

US 5 271 749 describes in the abstract a sintered compact comprising:
- 45 ― 65 WT % cBN
- 30 ― 45 wt % of another ceramic powder (hBN) and
- 2 ― 7 wt % of AIN and co-Aluminide.

DATABASE WPI Week 8830 Derwent Publication Ltd., London, GB; AN 88-209303 xp002061902 "Cubic boron nitride-based sintered materials manufacture" describes the preparation of sintered cBN starting out from a powder mixture of:
- cBN with a particle size of up to 10 µm
- TiC (1-20 %) of a particle size of up to 0,2 µm and
- an intermetallic compound with particle size of at least 0,3 µm; selected from CoAl, NiAl and (Co,Ni) Al.

Numerous other patents and applications relate to ceramic bonded cBN compacts. See, e.g., Japanese Application 79/113,987, which discloses a cutting tool composed of 30-70 volume % cBN and a continuous binder selected from group IVB, VB and VIB metal carbides, nitrides or mixtures thereof combined with aluminum; Japanese Application 79/171,511, which discloses a compact containing 30-80 volume % cBN, with the balance being Ti, Zr and Hf carbides, nitrides and carbonitrides, aluminum, and a Fe or Cu binder; Japanese Application 79/332,313, which discloses a compact containing 20-80 volume % cBN with the balance being a ceramic (including sub-stoichiometric ceramics) selected from TiC and/or Ti(C,N), with Ni and Mo; Japanese Application 80/93,152, which discloses a compact composed of 30-80 volume % cBN with the balance being selected from Ti, Zr, Hf carbides, nitrides, carbonitrides, W, Al and Cu; Japanese Application 84/241,827, which discloses a compact containing 30-80 molo cBN with the balance being a titanium oxycarbonitride binder dispersed with Li, Ca, Mg, Al, Si, Fe and their alloys; Japanese Application 85/297,545, which discloses a compact containing 50-75 volume % cBN and a binder containing 20-30 wt % Al, a titanium compound, and W; and Japanese Application 86/32,170, which discloses a compact containing 40-95 volume% cBN and/or wBn and diamond in a binder phase containing TiN and/or TiCN and metals selected from Al, Si, Nb, Mo, Ni, and/or Co. None of these references discloses applicants' unique combination of components, i.e., cBN, ceramic and a peritectically melting metal alloy.

With respect to supported compacts, it is speculated, as is detailed in U.S. Pat. No. 4,797,326, that the bonding of the support to the polycrystalline abrasive mass involves a physical component in addition to a chemical component which develops at the bondline if the materials forming the respective layers are interactive. The physical component of bonding is seen to develop from the relatively lower coefficient of thermal expansion (CTE) of the polycrystalline abrasive layer as compared to the cemented metal support layer. That is, upon the cooling of the supported compact blank from the HT/HP processing conditions to ambient conditions, it has been observed that the support layer retains residual tensile stresses which, in turn, exert a radial compressive loading on the polycrystalline compact supported thereon. This loading maintains the polycrystalline compact in compression which thereby improves fracture toughness, impact, and shear strength properties of the laminate.

In the commercial production of supported compacts, however, it is common for the product or blank which is recovered from the reaction cell of the HT/HP apparatus to be further subjected to a variety or finishing operations which include cutting, such as by electrode discharge machining or with lasers, milling, and especially grinding to remove any adherent shield metal from the outer surfaces of the compact. Such finishing operations additionally are employed to machine the compact into a cylindrical shape or the like which meets product specifications as to cBN abrasive table thickness and/or carbide support thickness. A substantially uniform abrasive layer thickness is desirable since the abrasive tables on the blanks are often machined by the user into final products having somewhat elaborate configurations, e.g., sawtoothed wedges, which are tailored to fit particular applications. It will be appreciated, however, that during such finishing operations, the temperature of the blank, which previously has been exposed to a thermal cycle during its HT/HP processing and cooling to room temperature, can be elevated due to the thermal effects of grinding or cutting operations.

The blank or product finished therefrom may be mounted onto a variety of cutting or drilling tools using braze techniques which again subject the compacts and supports to thermal gradients and stresses. During each of the thermal cyclings of the supported blank, the carbide support, owing to its relatively higher coefficient of thermal expansion (CTE), will have expanded to a greater extent than the abrasive compact supported thereon. Upon heating and cooling, the stresses generated are relieved principally through the deformation of the abrasive material which may result in stress cracking.

As the supported compacts previously known in the art have garnered wide acceptance for use in cutting and dressing tools, drill bits, and the like, it will be appreciated that any improvements in the strength and machining properties of such materials would be well-received by industry. There has been and remains a need for cBN supported compacts having improved physical properties. Especially desired are ceramic bonded cBN compacts having particular utility in the machining of ferrous metals.

It is an object of the present invention to provide ceramic bonded cBN compacts having superior machining and cutting ability, particularly when used with ferrous metals.

According to the present invention, there is provided an improved ceramic bonded cBN compact comprising cBN powder in an amount less than 70% by weight, ceramic powder other than cBN and a peritectically melting metal aluminide alloy, wherein the cBN powder ranges in average particle size from about 0.2 to about 10 µm, and the ceramic powder ranges in average particle size from about 0.1 to about 4 µm wherein the average size ratio of the said cBN powder to said ceramic powder ranges from about 3:1 to about 3:2.

Recognition of the importance of the size of the ceramic particles in comparison to the cBN particles is an important aspect of the present invention. The grain size of ceramic materials and the grain size distribution of ceramic materials is often correlated to the strength and toughness of the ceramic body. While the grain size of the cBN used in ceramic bonded cBN compacts is taught in many US patents and is commonly referred to in the. literature, the inventors are unaware of any reference to the grain size of the ceramic phase, which is commonly composed of TiN, TiC or solid solution mixtures of TiN and TiC. The present inventors have unexpectedly found that a preferred size range for the ceramic component exists. The use of particles within this size range, i.e., roughly 1/3 to 2/3 the size of the cBN grains, results in improved cBN compacts with superior machining and cutting ability for ferrous metals. Since finer grain compacts give greater impact resistance, perform suitably for aggressive cutting applications, and give smoother surfaces in finishing applications, a cBN particle size less than about 4 microns, and ceramic powder size less than about 2 microns, is particularly preferred.

The use of peritectically melting metal alloys is an additional important aspect of the present invention. In the past, ceramic powders such as Si₃N₄, Al₂O₃, and B₄C as well as metals such as Co, Ni, Si, and Al have been used as additives to improve mechanical, chemical, and bonding properties of ceramic bonded cBN compacts. However, while improving some properties of the compacts, these additives often detrimentally affect the others, thus resulting in overall poor compact machining performance. Peritectically melting metal alloys, including metal aluminide alloys, offer a unique combination of properties (melting point, diffusion coefficient, and chemical reactivity) allowing the manufacture of cBN compacts with superior machining and cutting ability for ferrous metals.

Particularly preferred are metal aluminide alloys (MₓAl_{y}) having melting points between 800 and 1500° C. In addition, M should serve as a sintering aid for TiN, TiC, or Ti(Nₐ, C_{b}, O_{c}) where a+b+c is less than 1.0. Examples of M found in the literature that may serve as a sintering aid and which also have melting points in the desired range include Co, Cr, Mo, Ni, and W. All of these metals have at least one aluminide that melts peritectically. The peritectically melting alloy melts over a temperature range that enhances the sintering process and aids in rearranging the cBN and ceramic particles into closer proximity. In particular, the examples described herein demonstrate that cBN compacts made in accordance with the present invention, e.g., containing NiAl₃ and TiN in addition to cBN, significantly outperform competitive products that do not include NiAl₃.

In short, the ceramic bonded cBN compacts of the present invention, which combine specifically selected components having even more specifically selected physical parameters, provide improved machining properties for use in ferrous alloys and steels, as well as longer cutting life, and less cracking, chipping and delamination of the abrasive layer.

Embodiments of the invention will now be described, by way of example, with reference to the accompanying drawings, in which:-

FIG. 1 is a cross-sectional view of a conventional HT/HP apparatus which may be utilized to prepare the ceramic bonded cBN compacts of the present invention.

FIG. 2 shows in cross-section a charge assembly configured according to the prior art for use within the reaction cell of the HT/HP apparatus of FIG. 1.

It is well known to those of skill in the art that the wear properties of ceramic bonded cBN compacts are greatly dependent on the mechanical, chemical and bonding properties of the ceramic matrix. Properties such as Young's modulus, transverse rupture strength (TRS), fracture toughness, Vickers hardness, and chemical resistance to hard steel alloys can be dramatically improved by using the peritectically melting metal alloys of the present invention in the sintering process. In particular, the preferred metal aluminide alloys possess unique properties (peritectic formation, melting in multiphase equilibrium, low chemical reactivity) which are different from their individual metal components. When used as additives, these alloys yield improved compact properties which could not be attained, and which would not be expected, by instead using the individual metal components. One possible explanation for this result is that the peritectically melting alloy melts over a temperature range that enhances the sintering process and aids in rearranging the cBN and ceramic particles into closer proximity.

The superior cutting tool of the present invention may also be obtained by reducing the dislocation density of the ceramic in the final product. This can be accomplished by techniques that increase the diffusion rates of, for example, Ti and N in TiN. Such techniques include the use of higher sintering temperatures for the TiN, the use of nitrogen deficient TiN, or the presence of a liquid such as NiAl₃ or other liquid metal that has solubility for TiN. These techniques can be used in combination or separately.

A superior cutting tool in accordance with the present invention may also be made if the grain size of the ceramic component and the cBN in the sintered, ceramic bonded cBN compact is carefully controlled in a relatively narrow range. This results in the best combination of toughness and strength in the resultant ceramic bonded cBN cutting tool. In practice, very fine grain size is more difficult to sinter -- the large surface area of the starting powder unavoidably contains surface contamination that will interfere with the sintering process. Poorer mechanical properties inevitably result. On the other hand, very large grain sizes should also be avoided. The largest flaw in the stressed volume of a ceramic will determine the mechanical properties of the ceramic body. It is commonly accepted that in the absence of other flaws, the critical flaw size leading to failure will be equal in size to the grain size of the ceramic. It has been found that a preferred average ceramic grain size ranging from about 0.1 to about 4 microns produces a superior ceramic bonded cBN cutting tool for the machining of ferrous alloys.

The present invention is an outgrowth, in part, of the observation of brittle, non-tough behavior in metals which have been exposed to extensive plastic deformation. Since high toughness and nonbrittle behavior are desired for cutting tools used to machine ferrous alloys, and since ceramics such as TiN have many properties that are similar to metals, the present inventors undertook an investigation into the causes of, and solutions to, these undesirable effects. Starting with the premise that TiN may have other properties including mechanical properties that will have the same trends as observed in metals, the inventors observed that during fabrication of a ceramic bonded cBN cutting tool very high pressures are used to help densify the compact. This densification leads to extensive plastic deformation of the ceramic grains. One physical manifestation of this deformation is the extensive dislocation networks that can be found in the TiN grains by transmission electron microscopy (TEM). It is believed that these highly strained grains exhibit more brittle and less tough behavior than similar grains that have a decreased level of dislocations. Experimental results have qualitatively shown that TiN bonded cBN cutting tools with low dislocation density in the TiN grains have superior performance and cutting ability for ferrous metals when compared to existing commercial tools.

The potentially adverse effects of oxygen were also taken into consideration. TiN, TiC, and TiO are isostructural and are known to be significantly soluble in each other. As oxygen is known to impede the sintering of ceramics such as TiN, its presence would expectedly result in less than optimum sintering and poor mechanical performance of a cBN/TiN tool. Actually, the inventors have found that as long as the cutting tool has less than 4 atom % oxygen that a cBN compact with superior machining and cutting performance for ferrous metals can be prepared.

One type of apparatus which can be used to make the preferred compacts of the present invention is the high pressure, high temperature apparatus described in U.S. Pat. No. 2,941,248 and illustrated in FIG. 1. Apparatus 10 includes a pair of cemented tungsten carbide punches 11 and 11' and an intermediate belt or die member 12 of the same material. Die member 12 includes an aperture 13 in which there is positioned a reaction vessel 14. Between punch 11 and die 12 and between punch 11' and die 12 there are included gasketing/insulating assemblies 15 and 15', each comprising a pair of thermally insulating and electrically non-conducting pryophyllite members 16 and 17, and an intermediate metallic gasket 18.

Reaction vessel 14 in one preferred form includes a hollow salt cylinder 19. Cylinder 19 may be of other material, such as talc, which is not converted during high pressure, high temperature operation to a stronger, stiffer state and is substantially free of volume discontinuities occurring under the application of high pressures and temperatures. Materials meeting the criteria set forth in U.S. Pat. No. 3,030,662 are useful for preparing cylinder 19.

Positioned concentrically within and adjacent to cylinder 19 is a graphite electrical resistance heater tube 20. Within graphite heater tube 20 there is in turn concentrically positioned the cylindrical salt liner 21. The ends of liner 21 are fitted with salt plugs 22 and 22', disposed at the top and bottom, respectively. As will be described hereinbelow, liner 21 may have a cylindrical hollow core to receive one large charge assembly containing sub-assemblies or the liner may consist of a series of mold assemblies arranged in a stack for the preparation of a plurality of composite tool inserts or compacts.

Electrically conductive metal end discs 23 and 23' are utilized at each end of cylinder 19 to provide electrical connection to graphite heater tube 20. Adjacent each disc 23 and 23' is an end cap assembly 24 and 24', each of which comprises a pyrophyllite plug or disc 25 surrounded by an electrical conducting ring 26.

Operational techniques for simultaneously applying both high pressures and high temperatures in this apparatus are well known to those skilled in the art. The foregoing description relates to only one high pressure, high temperature apparatus which can be used for practicing the present invention. Various other apparatuses are capable of providing the required pressures and temperatures that may be employed within the scope of this invention.

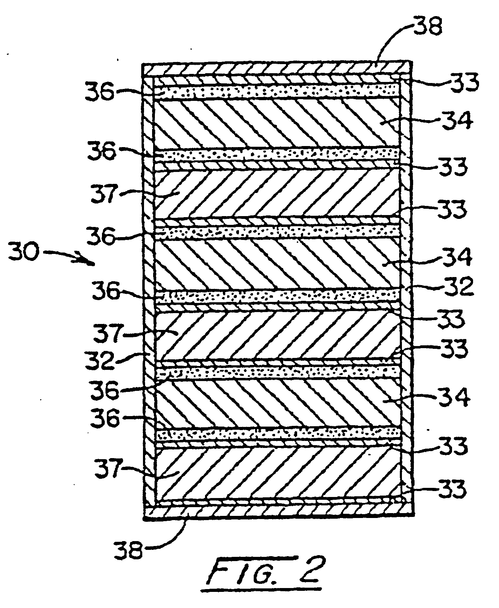

FIG. 2 illustrates a charge assembly arrangement for producing a plurality of disc or pill-shaped composites-i.e., sintered carbide masses with a layer of cubic boron nitride, over each of the upper and lower surfaces of said sintered carbide masses. Charge assembly 30, although not illustrated in proportion, fits within space 31 of the apparatus of FIG. 1.

Charge assembly 30 consists of a cylindrical sleeve 32 of shield metal, preferably selected from the group consisting of zirconium, titanium, tantalum, tungsten and molybdenum. Within cylindrical shield metal sleeve 32 are disposed a number of sub-assemblies protected above and below by shielding discs 33, preferably made of titanium or zirconium, and having pyrophyllite plugs 38 and 38' at the ends of said sleeve 32. Each sub-assembly so protected on all sides consists of a support mass 34 and cBN mass 36. disposed above and below said support mass 34. Each mass 34 can be made of a suitable support material which preferably is a carbide molding powder. Tungsten carbide, titanium carbide, tantalum carbide, and molybdenum carbide or a mixture thereof is most desirable, with tungsten carbide, plus cobalt powder being especially preferred.

Instead of arranging masses 34 and 36 with a sharp transition from the carbide powder mix to the abrasive powder layer, a transition layer (not shown) may be provided. This transition layer may contain both carbide powder and cBN in a gradated mix to minimize stress concentration as taught in U.S. Pat. Re. No. 32,380. Alternatively, an intermediate mass may be included, for example, as taught in U.S. Pat. Nos. 4,403,015 and 4,440,573, Other variations will, of course, be obvious to those skilled in the art.

It is also contemplated that the invention can be practiced by employing a pre-sintered carbide disc for mass 34 to produce a unified mass as described below. Whether in the form of a powder or a pre-sintered disc, mass 34 preferably has a thickness of from about 0.060 inch to about 0.125 inch.

In the preparation of the tool inserts by the instant process, charge assembly 30 is placed in space 31 of apparatus 10, pressure is applied thereto and the system is heated. The temperatures employed are in the range of from about 1200° C to about 2000° C for periods of time in excess of about three minutes, while at the same time, the system is subjected to very high pressure, for example, on the order of 40 kilobars or more.

After completion of the high pressure, high temperature process, first the temperature and then the pressure is reduced. Upon recovery of the tool insert masses, the protective sheath metal remains strongly affixed to the outer surface thereof. Exposure of the desired surfaces of the composite tool inserts is accomplished by simply grinding away the protective sheath.

It should be appreciated that the shape of the tool inserts of the present invention need not be cylindrical, but can also be, for example, wedge-shaped, cubic, or the like.

In order to better enable those skilled in the art to practice the present invention, the following examples are provided by way of illustration and not by way of limitation.

In accordance with this invention, an improved compact is manufactured by pressing a mixture of cBN, where the cBN content is <70% by wt, TiN (or TiNₓ), where x ranges from about 0.95 to about 0.60, and NiAl₃ powder at HT/HP conditions to produce a dense sintered polycrystalline blank. The abrasive compact blanks of the invention were made by sintering cBN, TiN, and NiAl₃ mixtures, in the amounts represented in Table 1.

**Table 1**

| **Sample#** | **cBN** | **cBN Average** | **TiN** | **TiN Average** | **NiAl**_{**3**} |
|---|---|---|---|---|---|
| | **(wt%)** | **Size (mm)** | **(wt%)** | **Size (mm)** | **(wt%)** |
| 1 | 55 | 2-4 | 40 | 0.4-0.5 | 5 |
| 2 | 53.6 | 0.8 | 39 | 0.4-0.5 | 7.4 |

In a typical operation using the materials as specified in Table 1, fine cBN powder having an average size less than 5 µm is fired in ammonia at 950° C and is then blended with 5 weight percent nickel aluminide (NiAl₃) powder having a mean size between 2 and 3 µm. Blending of all the materials was performed with a ball mill using an alcohol medium and cemented tungsten carbide balls. The blended material was found to contain a very small amount of cemented carbide particles which were abraded from the mill balls. The blend was vacuum fired at a temperature ranging from 900 to about 1150° C. A quantity of the mixed material was loaded in a refractory metal cup. A disc of cemented carbide was then inserted and such cups were then used to produce assemblies for high pressure, high temperature processing.

The charge assembly was placed in an apparatus similar to that shown in FIG. 1, and heated at a temperature of about 1400° C and subjected to pressure of about 70 kilobars for a period of about 18 minutes. The temperature was then lowered and the removal of pressure begun when the temperature reached about 650° C. The result was a compact having excellent properties.

Tool inserts manufactured in accordance with the foregoing procedure were tested to determine their mechanical and physical properties. One advantage of the invention is that as a result of NiAl₃ diffusion into and reaction with a ceramic matrix and abrasive material the resulting compact has improved performance over tools not made with NiAl₃.

Table 2 shows comparisons of the new product to two existing commercial products with similar phase composition and chemistry. However, the presently available commercial products have different cBN and ceramic grain sizes from those contemplated by the present invention. The TiN grain size, the dislocation density in the TiN, and the performance of each of the products is compared below.

**Table 2**

| **Product** | **Average TiN Grain Size** | **Dislocation Density** | **Performance** |
|---|---|---|---|
| commercial product #1 | 1.5 | extensive | 50 to 75% |
| commercial product #2 | 0.02 to 0.05 | moderate | 100% |
| new product | 0.5 | low | 200 to 250% |

In an additional test, cutting tools were fabricated from sintered blanks of the present invention. Similar tools were made from a commercial product that does not contain NiAl₃. The tools were then compared for their ability to machine automotive steels in dry machining tests using the following conditions:
- 1.: Material: 8620 steel.
Hardness:58 Hardness Rockwell C (HRC)
Condition: dry
Operation: boring
Depth of Cut (DOC) : 0.15 mm (0.006")
Feed Rate: 0.165 mm per revolution (0.0065 Inches per Revolution)
Cutting Speed revs per minute(RPM): 260
Piece/edge: competitive tool: 150
new tool: 370
- 2.: Material: 8620 steel
Hardness; 64 HRC
Condition: dry
Operation: rough boring
DOC: 0.15 mm (0.006")
Feed Rate: 0.38 mm per revolution (0.015 inches per revolution)
RPM 850
Piece/edge: competitive tool: 46
new tool: 107

Thus, in accordance with the present invention there is provided a ceramic bonded cBN compact that outperforms currently available commercial products by as much as 200 to 250%.

## Claims

1. An improved ceramic bonded cBN compact comprising cBN powder in an amount less than 70% by weight, ceramic powder other than cBN and a peritectically melting metal aluminide alloy, wherein the cBN powder ranges in average particle size from about 0.2 to about 10 µm, and the ceramic powder ranges in average particle size from about 0.1 to about 4 µm wherein the average size ratio of the said cBN powder to said ceramic powder ranges from about 3:1 to about 3:2.

2. A compact according to claim 1 wherein the metal component of the metal aluminide alloy is selected from the group consisting of Co, Cr, Mo, Ni, W and mixtures thereof.

3. A compact according to claim 2 wherein the metal aluminide is NiAl3.

4. A compact according to claim 1 wherein the ceramic powder is selected from the group consisting of nitrides, carbides, carbonitrides, borides and silicides of group IVa and Vb transition metals and mixtures thereof.

5. A compact according to claim 1, wherein said ceramic powder is represented by the formula TiX_{z} wherein X is selected from the group consisting of N, C, carbonitrides, and mixtures thereof, and z represents the amount of said X and ranges from about 0.6 to about 0.95.

6. A compact according to claim 1 wherein the compact further comprises an element selected from the group consisting of cobalt, iron, nickel and mixtures thereof.

7. A compact according to claim 4 wherein said ceramic powder is selected from the group consisting of TiN, TiC, a titanium carbonitride and mixtures thereof.

8. A compact according to any one of claims 1-7 comprising:
70 to 40% by weight of cBN,
30 to 60% by weight of ceramic powder, and
0.5 to 10% by weight of a peritectically melting metal aluminide alloy.

## Patentansprüche

1. Verbesserter keramisch gebundener cBN-Pressling, umfassend cBN-Pulver in einer Menge von weniger als 70 Gew.-%, Keramikpulver außer cBN und eine peritektisch schmelzende Metallaluminid-Legierung, worin das cBN-Pulver eine mittlere Teilchengröße von etwa 0,2 bis etwa 10 µm und das Keramikpulver eine mittlere Teilchengröße von etwa 0,1 bis etwa 4 µm aufweist, wobei das mittlere Größenverhältnis des cBN-Pulvers zu dem Keramikpulver im Bereich von etwa 3:1 bis etwa 3:2 liegt.

2. Pressling nach Anspruch 1, worin die Metall-Komponente der Metallaluminid-Legierung ausgewählt ist aus der Gruppe bestehend aus Co, Cr, Mo, Ni, W und deren Mischungen.

3. Pressling nach Anspruch 2, worin das Metallaluminid NiAℓ₃ ist.

4. Pressling nach Anspruch 1, worin das Keramikpulver ausgewählt ist aus der Gruppe bestehend aus Nitriden, Carbiden, Carbonitriden, Boriden und Siliciden der Übergangsmetalle der Gruppe IVa und Vb und deren Mischungen.

5. Pressling nach Anspruch 1, worin das Keramikpulver durch die Formel TiX_{z} repräsentiert ist, worin X ausgewählt ist aus der Gruppe bestehend aus N, C, Carbonitriden und deren Mischungen und z die Menge von X repräsentiert und im Bereich von etwa 0,6 bis etwa 0,95 liegt.

6. Pressling nach Anspruch 1, worin der Pressling weiter ein Element umfasst, ausgewählt aus der Gruppe bestehend aus Cobalt, Eisen, Nickel und deren Mischungen.

7. Pressling nach Anspruch 4, worin das Keramikpulver ausgewählt ist aus der Gruppe bestehend aus TiN, TiC, einem Titancarbonitrid und deren Mischungen.

8. Pressling nach einem der Ansprüche 1 bis 7, umfassend:
70 bis 40 Gew.-% cBN,
30 bis 60 Gew.-% Keramikpulver und
0,5 bis 10 Gew.-% einer peritektisch schmelzenden Metallaluminid-Legierung.

## Revendications

1. Comprimé amélioré en nitrure de bore cubique (NBc) lié par de la céramique, comprenant de la poudre de NBc en une proportion inférieure à 70 % en poids, de la poudre de céramique autre que le nitrure de bore cubique et un alliage du type aluminure de métal, à fusion péritectique, la taille moyenne de particule de la poudre de NBc allant d'environ 0,2 à environ 10 µm et la taille moyenne de particule de la poudre de céramique allant d'environ 0,1 à environ 4 µm, le rapport de la taille moyenne de ladite poudre de NBc à la taille moyenne de ladite poudre de céramique allant d'environ 3:1 à environ 3:2.

2. Comprimé selon la revendication 1, pour lequel le constituant métallique de l'alliage du type aluminure de métal est choisi parmi Co, Cr, Mo, Ni, W et leurs mélanges.

3. Comprimé selon la revendication 2, pour lequel l'aluminure de métal est NiAl₃.

4. Comprimé selon la revendication 1, pour lequel la poudre de céramique est choisie parmi les nitrures, les carbures, les carbonitrures, les borures et les siliciures des métaux de transition des groupes IVa et Vb, et leurs mélanges.

5. Comprimé selon la revendication 1, pour lequel ladite poudre de céramique est représentée par la formule TiX_{z} dans laquelle X représente N, C, un carbonitrure ou leurs mélanges, et z représente la proportion dudit X et va d'environ 0,6 à environ 0,95.

6. Comprimé selon la revendication 1, qui comprend en outre un élément choisi parmi le cobalt, le fer, le nickel et leurs mélanges.

7. Comprimé selon la revendication 4, pour lequel ladite poudre de céramique est choisie parmi TiN, TiC, les carbonitrures de titane et leurs mélanges.

8. Comprimé selon l'une quelconque des revendications 1 à 7, qui comprend 70 à 40 % en poids de NBc, 30 à 60 % en poids de poudre de céramique et 0,5 à 10 % en poids d'un alliage du type aluminure de métal, à fusion péritectique.
